# DEMANDE DE BREVET EUROPEEN

(11) **EP 1 388 447 A1**
(43) Date de publication de la demande: **11.02.2004**
(21) Numéro de dépôt: 03356122.6
(22) Date de dépôt: 07.08.2003
(51) Int. Cl.: B60J 5/10

(54) **Porte pour espace de chargement et véhicule industriel pourvu d'au moins une telle porte**

(30) Priorité: 08.08.2002 FR 0210093
(71) Demandeur: Boyriven, 69003 Lyon (FR)
(72) Inventeur: Nallet, Christophe, 69008 Lyon (FR)
(74) Mandataire: Schouller, Jean-Philippe

(57) **Abrégé**

Cette porte (2), qui peut entrer en rotation, par rapport à une paroi du véhicule, selon un angle supérieur à 180°, notamment voisin de 270°, comprend un panneau principal (12), au moins deux organes de charnières, dont chacun est apte à recevoir deux arbres parallèles, ainsi qu'un ensemble de recouvrement (14, 16, 18) du panneau (12).

Cet ensemble comprend un profilé d'habillage (14), recouvrant le panneau (12) sur son bord (12₁) d'articulation avec la paroi latérale (4), un profilé d'étanchéité (18), ainsi que plusieurs profilés intermédiaires (16), délimitant deux à deux des espaces libres de réception des organes de charnière, alors qu'il est prévu des moyens (14₄, 14₆, 16₂, 16₃, 16₄, 18₄, 20) assurant une fixation amovible entre ces différents profilés, notamment par emboîtement et vissage ou rivetage, de manière à autoriser un démontage de cet ensemble de recouvrement.

## Description

La présente invention concerne une porte pour espace de chargement, ainsi qu'un véhicule industriel pourvu d'au moins une telle porte.

Au sens de l'invention, un véhicule industriel désigne notamment une semi-remorque, une remorque, un porteur, un conteneur, ou encore un véhicule utilitaire léger.

De façon classique, un tel véhicule industriel possède un espace de chargement délimité par plusieurs parois, à savoir généralement un fond, un toit et des parois latérales. Au moins une porte est prévue, le plus souvent à l'arrière, afin de garantir l'accès à cet espace de chargement. Cela nécessite généralement la présence d'un cadre rigide, assurant la structure de l'espace de chargement et la fixation de la porte.

Il est tout particulièrement avantageux qu'une telle porte puisse être ouverte selon un angle supérieur à 180°, en particulier égal à 270°. Ainsi, dans sa position ouverte assurant l'accès à l'espace de chargement, chaque porte se trouve disposée parallèlement à une paroi latérale correspondante, de sorte qu'elle n'entrave pas les manoeuvres de chargement ou de déchargement.

De façon plus précise, cette porte connue comprend un panneau central, par exemple de type « sandwich », qui est encadré par des profilés de recouvrement. De plus, elle est munie, sur un de ses bords latéraux, de plusieurs organes de charnière, encore dénommés charnons, assurant son articulation sur une paroi du véhicule, soit directement, soit par l'intermédiaire du cadre rigide précité.

A cet effet, il est prévu deux axes de rotation parallèles, dont chacun s'étend au travers d'une extrémité latérale correspondante du charnon. Un premier axe s'étend au voisinage du cadre rigide de la caisse du véhicule, alors que l'autre axe est prévu sur le bord latéral en regard de la porte.

Différents types de profilés de recouvrement, prévus sur le bord d'articulation de la porte, sont connus de l'état de la technique.

Ainsi, dans EP-A-0 362 060, ce profilé de recouvrement se trouve entièrement défoncé, en diverses zones, afin de recevoir les différents charnons. Ce profilé supporte par ailleurs une garniture intérieure rapportée, sur laquelle est prévu un joint, assurant l'étanchéité avec l'intérieur de la caisse.

Selon l'agencement de EP-A-0 698 515, le bord d'articulation de la porte est revêtu d'un profilé, dans lequel sont ménagées des découpes, destinées à la réception des charnons. Ces découpes sont uniquement prévues sur le côté extérieur de ce profilé, alors que sa paroi intérieure, qui s'étend continûment sur toute la hauteur de la porte, reçoit un joint d'étanchéité.

L'invention se propose d'améliorer les solutions connues décrites ci-dessus, en particulier en termes de réparabilité.

L'invention vise notamment à réaliser une porte pour espace de chargement qui puisse être réparée de façon plus simple et moins onéreuse que dans l'art antérieur, dans le cas où un de ses éléments constitutifs se trouve endommagé.

A cet effet, elle a pour objet une porte pour espace de chargement, destinée à être articulée sur une paroi délimitant l'espace de chargement d'un véhicule industriel, cette porte pouvant entrer en rotation, par rapport à cette paroi, selon un angle supérieur à 180°, notamment voisin de 270°, cette porte comprenant un panneau principal, au moins deux organes de charnière, situés sur un bord d'articulation de ce panneau, dont chacun est apte à recevoir au moins des premier et second tronçons d'arbre, s'étendant selon des premier et second axes parallèles, ainsi qu'un ensemble de recouvrement du panneau, qui est pourvu de moyens assurant l'étanchéité avec l'espace de chargement et qui délimite des espaces libres de réception des organes de charnière, caractérisée en ce que cet ensemble de recouvrement comprend un profilé d'habillage, recouvrant le panneau sur son bord d'articulation avec la paroi latérale, un profilé d'étanchéité, pourvu des moyens d'étanchéité, ainsi que plusieurs profilés intermédiaires, qui délimitent deux à deux les espaces libres de réception des organes de charnière, alors qu'il est prévu des moyens permettant une fixation amovible entre ces différents profilés, de manière à autoriser un démontage de cet ensemble de recouvrement.

Selon d'autres caractéristiques de l'invention :
- les moyens de fixation amovible comprennent des moyens de fixation par emboîtement ;
- les moyens de fixation par emboîtement comprennent au moins une lèvre, dont est muni chaque profilé intermédiaire, apte à pénétrer dans un logement correspondant du profilé d'habillage ;
- les moyens de fixation par emboîtement comprennent au moins une nervure, dont est muni chaque profilé intermédiaire, apte à pénétrer dans un logement du profilé d'étanchéité ;
- les moyens de fixation amovible comprennent des moyens de fixation par vissage ou rivetage, en particulier au moins une vis ou un rivet s'étendant au travers du profilé d'habillage, du profilé d'étanchéité et d'un profilé intermédiaire correspondant ;
- chaque organe de charnière est associé à un organe de liaison muni de deux embouts, dont chacun peut être emboîté dans un profilé intermédiaire correspondant, l'organe de charnière étant lié en translation par rapport à l'organe de liaison, tout en étant libre de pivoter par rapport à celui-ci ;
- le profilé d'étanchéité est pourvu d'une gorge recevant un joint d'étanchéité ;
- le profilé d'habillage et le profilé d'étanchéité s'étendent sur toute la hauteur de la porte ;
- le second axe s'étend au travers des profilés intermédiaires.

L'invention a également pour objet un véhicule industriel, comprenant un espace de chargement bordé par des parois, ainsi qu'au moins une porte articulée sur une de ces parois, de façon à autoriser l'accès à cet espace de chargement, caractérisé en ce que la ou chaque porte est telle que définie ci-dessus.

Selon une autre caractéristique de l'invention, la ou chaque porte est une porte avant, arrière ou latérale de ce véhicule industriel.

D'autres caractéristiques remarquables de l'invention ressortiront de la description qui va suivre d'un mode de réalisation, donnée à titre non limitatif en référence aux dessins annexés, sur lesquels :
- la figure 1 est une vue en perspective, illustrant de façon partielle un véhicule industriel pourvu d'une porte conforme à l'invention ;
- les figures 2 et 3 sont des vues en coupe selon les lignes II-II et III-III à la figure 1;
- la figure 4 est une vue en perspective, illustrant un organe de charnière appartenant à la porte des figures précédentes, sur lequel est monté un organe de liaison ; et
- les figures 5 et 6 sont des vues de dessus, illustrant deux phases successives de l'ouverture de la porte représentée sur les figures précédentes.

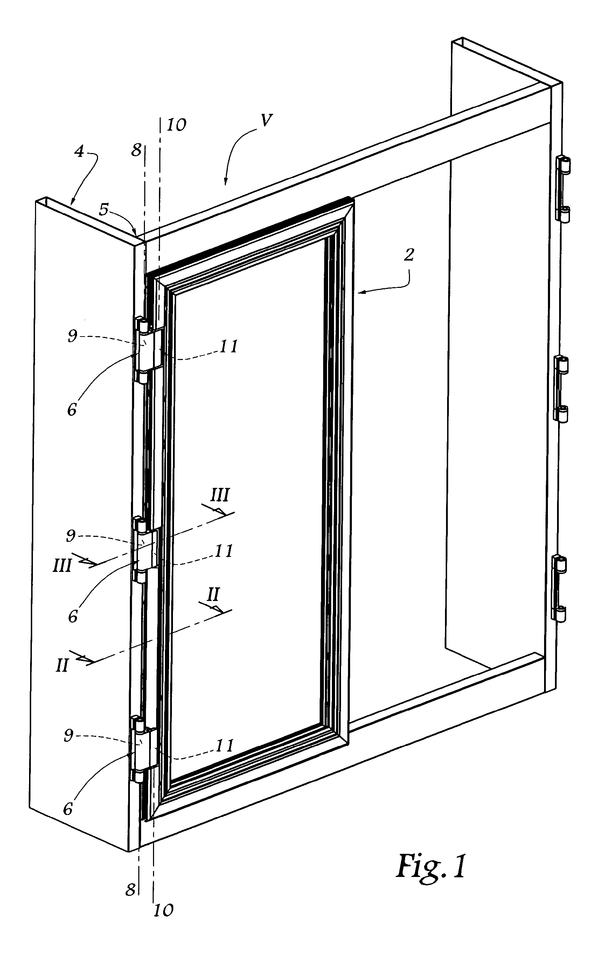

La figure 1 illustre une porte arrière, désignée dans son ensemble par la référence 2, appartenant à un véhicule industriel, dont l'espace de chargement est affecté de la référence V.

Cette porte 2 se trouve articulée sur un cadre rigide 5, prévu à l'extrémité arrière d'une paroi latérale 4 de la caisse de ce véhicule, qui est représentée partiellement. A titre de variante, la porte 2 peut être directement articulée sur cette paroi 4.

La porte est munie de plusieurs organes de charnière, ou charnons 6, dont seuls deux sont représentés sur la figure 1. Ces charnons, qui sont répartis sur la hauteur de la porte, assurent de façon connue l'articulation de cette dernière autour de deux axes parallèles, dont le premier 8 s'étend au voisinage de la caisse du véhicule, alors que le second 10 s'étend dans la porte 2.

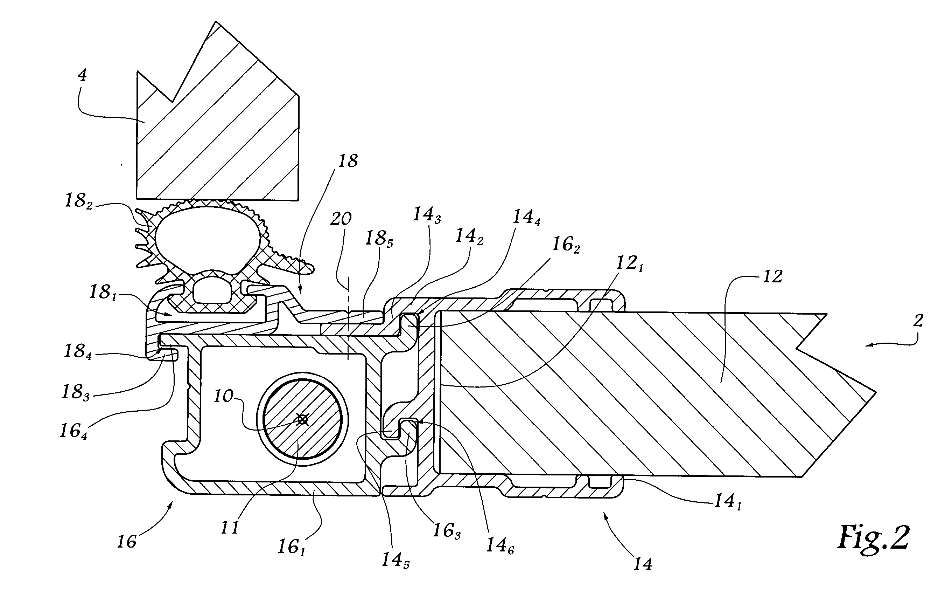

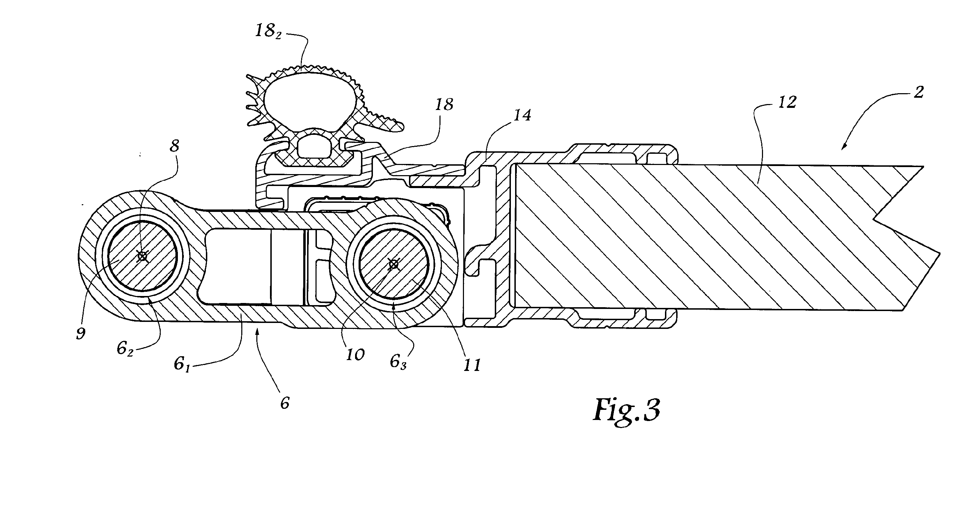

Ainsi, plusieurs premiers tronçons d'arbre 9 sont prévus le long de l'axe 8. De même, plusieurs seconds tronçons d'arbre 11 sont prévus le long de l'axe 10, comme le montrent notamment les figures 2 et 3.

En référence notamment à ces figures 2 et 3, la porte 2 comprend un panneau principal 12, par exemple de type « sandwich ». Ce dernier est revêtu, sur son bord latéral 12₁ adjacent à la paroi 4, d'un profilé d'habillage 14, s'étendant sur toute la hauteur de la porte.

Ce profilé 14, réalisé par exemple en aluminium, comprend un corps principal 14₁, sensiblement en forme de U, recouvrant le bord 12₁ du panneau. Ce corps est prolongé, à l'opposé du panneau 12, par une aile 14₂ pourvue d'un épaulement 14₃, qui délimite avec le corps 14₁ un premier logement 14₄.

Par ailleurs, l'âme du corps 14₁ est prolongée, dans sa partie médiane, par une nervure 14₅, qui délimite un second logement 14₆.

De plus, il est prévu plusieurs profilés intermédiaires 16, réalisés par exemple en aluminium, qui sont répartis sur la hauteur de la porte. Deux profilés intermédiaires adjacents définissent des espaces libres, au sein desquels sont reçus les organes de charnière 6.

Comme le montre la figure 2, chaque profilé 16 comprend un caisson principal 16₁, à l'intérieur duquel sont reçus les tronçons d'arbre 11. Ce caisson est prolongé, sur sa paroi adjacente au profilé 14, par deux lèvres 16₂ et 16₃, dont chacune pénètre dans un logement correspondant 14₄ ou 14₆ du profilé 14.

Cette coopération de ces lèvres et de ces logements garantit ainsi un premier type de fixation, par emboîtement, entre les profilés 14 et 16. De plus, chaque profilé intermédiaire 16 est pourvu, à l'opposé des lèvres 16₂ et 16₃, d'une nervure 16₄, dont la fonction sera décrite dans ce qui suit.

Enfin, il est prévu, du côté intérieur de la porte, en faisant référence à la position fermée de cette dernière, un profilé d'étanchéité 18. Ce dernier, qui est par exemple réalisé en aluminium, s'étend sur toute la hauteur de la porte.

Il comprend un corps médian définissant une gorge 18₁, tournée vers l'espace de chargement V du véhicule utilitaire. Cette gorge 18₁ reçoit un joint 18₂, destiné à coopérer avec le chant en regard de la paroi latérale 4, de manière à assurer l'étanchéité de l'espace de chargement V.

Le corps du profilé 18 se prolonge par une lèvre extérieure 18₃, définissant un logement 18₄ dans lequel pénètre la nervure 16₄ du profilé intermédiaire 16. Ceci assure une fixation, par emboîtement, entre ces profilés 16 et 18. Enfin, une aile latérale 18₅, faisant saillie vers le panneau 12, recouvre l'extrémité de l'aile 14₂ du profilé 14.

Il est à noter qu'une vis 20, s'étendant de l'intérieur vers l'extérieur, traverse successivement l'aile 18₅ du profilé 18, l'aile 14₂ du profilé 14, ainsi qu'une paroi du caisson 16₁ du profilé intermédiaire 16. Ceci assure une fixation supplémentaire, par vissage, entre ces trois profilés.

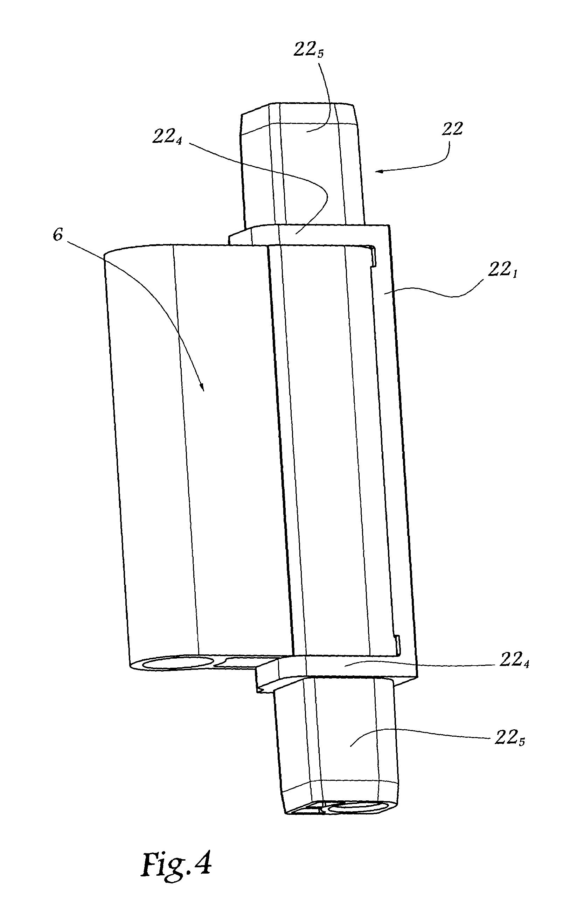

En faisant désormais plus particulièrement référence aux figures 3 et 4, chaque charnon 6 comprend un pont médian 6₁, ainsi que deux extrémités latérales, dont chacune est creusée d'un orifice traversant respectif 6₂, 6₃. Le premier axe 8 s'étend à travers l'orifice 6₂, tourné vers la paroi latérale 4, alors que le second axe 10 s'étend au travers de l'orifice 6₃, tourné vers le panneau 12.

Chaque charnon 6 est associé à un organe de liaison correspondant 22 (figure 4) qui comprend un corps 22₁, disposé le long du bord du charnon 6 tourné vers le panneau 12.

Le corps 22₁ est prolongé par deux joues 22_{4,} qui se trouvent en appui contre le débouché de l'orifice 6₃.

Il est par ailleurs prévu deux embouts 22₅, dont chacun peut être emboîté dans le caisson 16₁ d'un profilé 16 correspondant, ainsi que deux pions non représentés, s'étendant à l'intérieur de l'orifice 6₃.

Ces embouts et ces pions sont creux, de manière à recevoir les tronçons d'arbre 11, qui ne sont pas représentés sur cette figure.

Une fois montés le charnon 6 et son organe de liaison 22, ce dernier se trouve solidarisé, en translation et en rotation, par rapport à deux profilés intermédiaires 16 successifs, grâce aux embouts 22₅. Par ailleurs, chaque charnon 6 est solidaire en translation de cet organe de liaison 22, mais se trouve libre de pivoter par rapport à ce dernier.

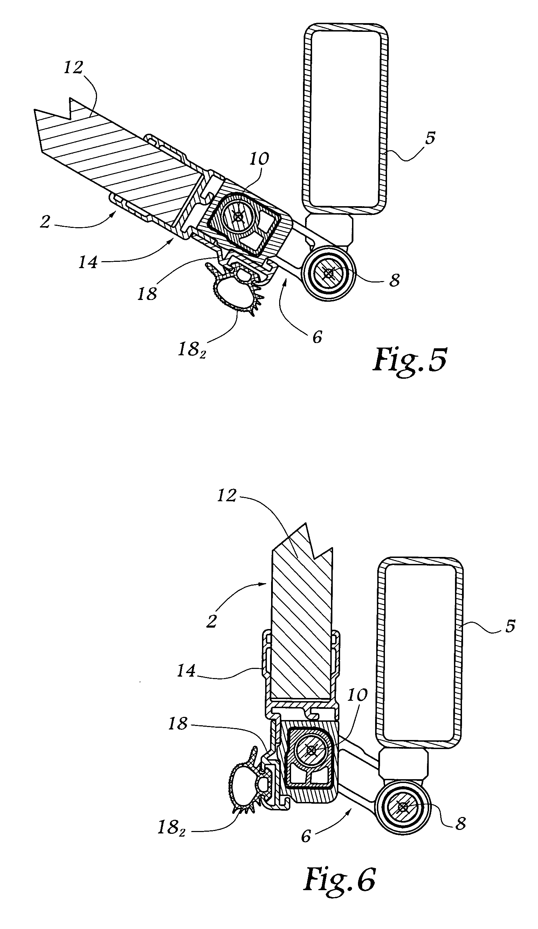

Les figures 5 et 6 représentent deux phases successives de l'ouverture de la porte 2.

Il s'agit, dans un premier temps (figure 5), de faire pivoter le charnon 6 par rapport au premier axe 8, selon un angle d'environ 210°. Lors de cette première phase, la porte ne pivote pas par rapport aux charnons, autour du second axe 10.

Puis, à partir de cette position intermédiaire, il s'agit de faire pivoter la porte 2 par rapport aux charnons 6, autour de ce second axe 10. Cette rotation d'environ 60° conduit la porte dans sa configuration finale de la figure 6, dans laquelle elle forme un angle d'environ 270° avec la paroi latérale 4.

Il est également prévu un ressort non représenté, dont une extrémité est solidaire du profilé d'étanchéité 18, alors que l'autre extrémité pénètre dans l'orifice 6₃ du charnon 6. Un tel ressort permet d'instaurer, de façon connue, une priorité dans les deux rotations précédemment évoquées.

Ainsi, lors de la fermeture de la porte, il s'exerce tout d'abord une rotation autour du second axe 10, la porte étant ramenée dans l'agencement de la figure 5, puis une rotation supplémentaire autour du premier axe 8. Ceci garantit une étanchéité satisfaisante, une fois cette porte refermée.

L'invention permet de réaliser les objectifs précédemment mentionnés.

Ainsi, elle offre tout d'abord une solution fiable, en termes de stabilité des éléments constitutifs de la porte. En effet, les différents efforts, auxquels sont soumis les profilés 14, 16 et 18, sont repris à la fois par les vis 20 et par les divers emboîtements entre ces profilés.

Par ailleurs, l'invention confère une grande modularité et une souplesse de maintenance remarquable à la porte pour espace de chargement.

En effet, les différents profilés, respectivement d'habillage, intermédiaires et d'étanchéité, peuvent être démontés les uns par rapport aux autres, de façon simple et rapide.

Par conséquent, il est possible de procéder à la réparation de l'ensemble de la porte, en changeant uniquement le profilé qui a été endommagé.

## Revendications

1. Porte (2) pour espace de chargement (V), destinée à être articulée sur une paroi (4) délimitant l'espace de chargement d'un véhicule industriel, cette porte pouvant entrer en rotation, par rapport à cette paroi, selon un angle supérieur à 180°, notamment voisin de 270°, cette porte comprenant un panneau principal (12), au moins deux organes de charnière (6), situés sur un bord d'articulation (12₁) de ce panneau, dont chacun est apte à recevoir au moins des premier (9) et second (11) tronçons d'arbre, s'étendant selon des premier (8) et second (10) axes parallèles (8, 10), ainsi qu'un ensemble de recouvrement (14, 16, 18) du panneau (12), qui est pourvu de moyens (18₂) assurant l'étanchéité avec l'espace de chargement (V) et qui délimite des espaces libres de réception des organes de charnière (6), **caractérisée en ce que** cet ensemble de recouvrement comprend un profilé d'habillage (14), recouvrant le panneau (12) sur son bord (12₁) d'articulation avec la paroi latérale (4), un profilé d'étanchéité (18), pourvu des moyens d'étanchéité (18₂), ainsi que plusieurs profilés intermédiaires (16), qui délimitent deux à deux les espaces libres de réception des organes de charnière (6), alors qu'il est prévu des moyens (14₄, 14₆, 16₂, 16₃, 16₄, 18₄, 20) permettant une fixation amovible entre ces différents profilés, de manière à autoriser un démontage de cet ensemble de recouvrement.

2. Porte selon la revendication 1, **caractérisée en ce que** les moyens de fixation amovible comprennent des moyens de fixation par emboîtement (14₄, 14₆, 16₂, 16₃, 16₄, 18₄).

3. Porte selon la revendication 2, **caractérisée en ce que** les moyens de fixation par emboîtement comprennent au moins une lèvre (16₂, 16₃), dont est muni chaque profilé intermédiaire (16), apte à pénétrer dans un logement correspondant (14₄, 14₆) du profilé d'habillage (14).

4. Porte selon la revendication 2 ou 3, **caractérisée en ce que** les moyens de fixation par emboîtement comprennent au moins une nervure (16₄), dont est muni chaque profilé intermédiaire (16), apte à pénétrer dans un logement (18₄) du profilé d'étanchéité (18).

5. Porte selon l'une quelconque des revendications précédentes, **caractérisée en ce que** les moyens de fixation amovible comprennent des moyens de fixation par vissage ou rivetage, en particulier au moins une vis (20) ou un rivet s'étendant au travers du profilé d'habillage (14), du profilé d'étanchéité (18) et d'un profilé intermédiaire correspondant (16).

6. Porte selon l'une quelconque des revendications précédentes, **caractérisée en ce que** chaque organe de charnière (6) est associé à un organe de liaison (22) muni de deux embouts (22₅), dont chacun peut être emboîté dans un profilé intermédiaire (16) correspondant, l'organe de charnière (6) étant lié en translation par rapport à l'organe de liaison (22), tout en étant libre de pivoter par rapport à celui-ci.

7. Porte selon l'une quelconque des revendications précédentes, **caractérisée en ce que** le profilé d'étanchéité (18) est pourvu d'une gorge (18₁) recevant un joint d'étanchéité (18₂).

8. Porte selon l'une quelconque des revendications précédentes, **caractérisée en ce que** le profilé d'habillage (14) et le profilé d'étanchéité (18) s'étendent sur toute la hauteur de la porte.

9. Porte selon l'une quelconque des revendications précédentes, **caractérisée en ce que** le second axe (10) s'étend au travers des profilés intermédiaires (16).

10. Véhicule industriel, comprenant un espace de chargement (V) délimité par des parois (4), ainsi qu'au moins une porte (2) articulée sur l'une (4) de ces parois, de manière à autoriser l'accès à l'espace de chargement, **caractérisé en ce que** la ou chaque porte (2) est conforme à l'une quelconque des revendications précédentes.

11. Véhicule selon la revendication 10, **caractérisé en ce que** la ou chaque porte (4) est une porte avant, arrière ou latérale.
